# EUROPÄISCHE PATENTSCHRIFT

(11) **EP 0 900 688 B1**
(45) Veröffentlichungstag und Bekanntmachung des Hinweises auf die Patenterteilung: **13.03.2002**
(21) Anmeldenummer: 98115210.1
(22) Anmeldetag: 13.08.1998
(51) Int. Cl.: B60N 2/42, B60N 2/48

(54) **Kopfstütze für einen Fahrzeugsitz**
Head rest for a vehicle seat
Appuie-tête pour un siège de véhicule

(30) Priorität: 06.09.1997 DE 19739131
(43) Veröffentlichungstag der Anmeldung: 10.03.1999
(73) Patentinhaber: DaimlerChrysler AG, 70567 Stuttgart (DE)
(72) Erfinder: Breitner, Roland, Dr., 71083 Herrenberg (DE); Heckmann, Thomas, 71134 Aidlingen (DE)

(56) Entgegenhaltungen:
- DE-A- 2 152 202
- DE-A- 2 220 267
- DE-A- 3 900 495
- US-A- 4 720 146
- US-A- 5 468 045

## Beschreibung

Die Erfindung betrifft eine Kopfstütze für einen Fahrzeugsitz gemäß dem im Dokument US 4 720 146 A offenbarten Oberbegriff des Patentanspruchs 1.

Bei einer weiteren bekannten Kopfstütze dieser Art (DE 39 00 495 A1) dient der als Luftsack ausgebildete Hohlkörper als Stellantrieb für den Polsterträger.

Bei einer ebenfalls bekannten Kopfstütze (DE 22 20 267 A1) ist der zwischen Polsterung und Stützbügel angeordnete elastische Hohlkörper mit einem Medium, wie Gas oder Flüssigkeit, gefüllt und über ein sog. Widerstandsteil mit einem leeren Hohlteil verbunden, das ebenfalls aus elastischem Material, z.B. Gummi, Kunstharz oder dgl., besteht. Das elastische Material des Hohlteils weist eine größere Kontraktionskraft als das Material des Hohlkörpers auf. Das Widerstandsteil kann als Rückschlag-, Regulier-, Klappen-, Rückschlagklappen-, Rückströmventil- oder dgl. ausgeführt sein, das sich manuell in Gegenrichtung öffnen läßt. Im Crashfall wird der vom Kopf des Sitzbenutzers auf das Kopfpolster ausgeübte Stoß in einen Druck auf das Medium im Hohlkörper umgewandelt, wodurch das Medium über das Widerstandsteil in das Hohlteil abströmen kann. Dadurch wird die Wucht des Kopfaufschlags auf das Kopfpolster teilweise absorbiert und in der Auswirkung auf den Sitzenden abgemildert. Zur Rückströmung des in das Hohlteil übergeströmten Mediums in den Hohlkörper muß das Widerstandsteil manuell geöffnet werden, wobei infolge der höhere Kontraktionskraft des Hohlteilmaterials das Medium wieder in den vom Knopfdruck entlastete Hohlkörper zurückströmt.

Der Erfindung liegt die Aufgabe zugrunde, bei einer Kopfstütze mit einem in der Neigung verstellbaren Kopfpolster der eingangs genannten Art in konstruktiv einfacher Weise sicherzustellen, daß im Crashfall die Kopfpolsterverstellung zuverlässig erhalten bleibt, die eingestellte Neigung sich also nicht ungewollt zurückstellt.

Die Aufgabe ist bei einer Kopfstütze der im Oberbegriff des Patentanspruchs 1 definierten Gattung erfindungsgemäß durch die Merkmale im Kennzeichenteil des Patentanspruchs 1 gelöst.

Die erfindungsgemäße Kopfstütze hat den Vorteil eines sehr einfachen Aufbaus. Durch den Hohlkörper mit Drosselöffnung ist das Kopfpolster im Normalfall gut in der Neigung zu verstellen. Die Ausbildung der Schwenklagerung sorgt dafür, daß die Kopfpolstereinstellung durch das Anlegen des Kopfes des Sitzbenutzers nicht verändert wird, sondern das Kopfpolster die gewählte die Einstellung beibehält. Der Hohlkörper folgt der langsamen Schwenkbewegung des Polsterträgers bei der Kopfpolsterverstellung, wobei je nach Schwenkrichtung infolge des geringen Strömungswiderstands der Drosselöffnung die Luft aus dem Hohlkörper entweichen oder in den Hohlkörper nachströmen kann. Im Crashfall, wenn der Kopf plötzlich gegen das Kopfpolster schlägt, ist der Strömungswiderstand der Drosselöffnung so hoch, daß Luft im nennenswerten Umfang nicht entweichen kann. Der Polsterträger mit Polsterung ist damit zuverlässig arretiert und wird nicht nach hinten verschoben. Der vorzugsweise aus PUR-Material gefertigte Hohlkörper ist kostengünstig herstellbar, wobei er entweder in der Formgebung selbstentfaltend ist oder vom Polsterträger bei dessen Schwenken entfaltet wird. Die Drosselöffnung ist einfach darstellbar und kann mit einem kleinen Loch in der Hohlkörperwand realisiert werden.

Vorteilhafte Ausführungsformen der erfindungsgemäßen Kopfstütze mit zweckmäßigen Weiterbildungen und Ausgestaltungen der Erfindung sind in den weiteren Patentansprüchen angegeben.

Die Erfindung ist anhand eines in der Zeichnung dargestellten Ausführungsbeispiels im folgenden näher beschrieben. Es zeigen:
- Fig. 1: einen Längsschnitt einer Kopfstütze mit in der Grundstellung befindlichem Kopfpolster,
- Fig. 2: eine gleiche Darstellung wie in Fig. 1 bei maximal verstelltem Kopfpolster.

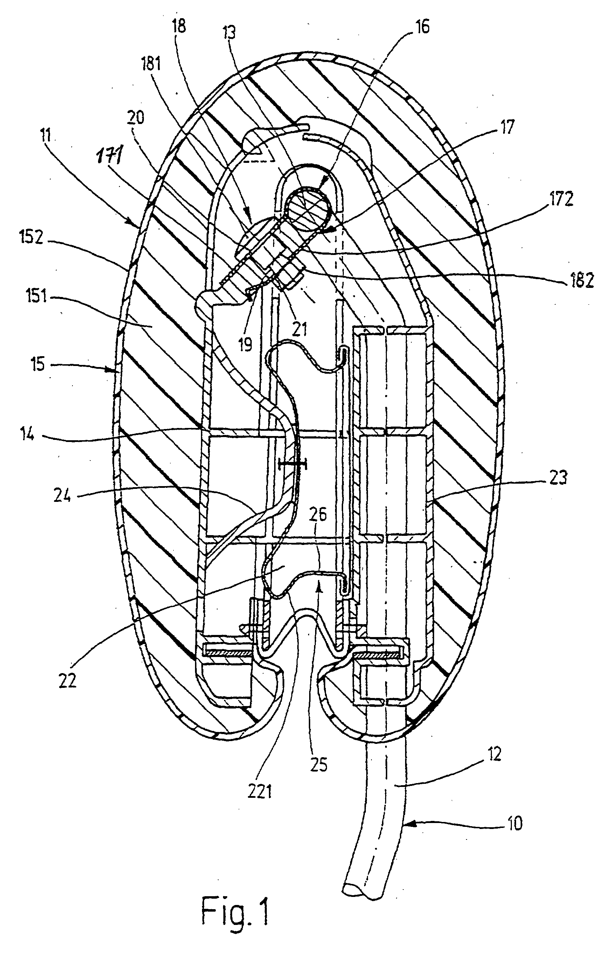

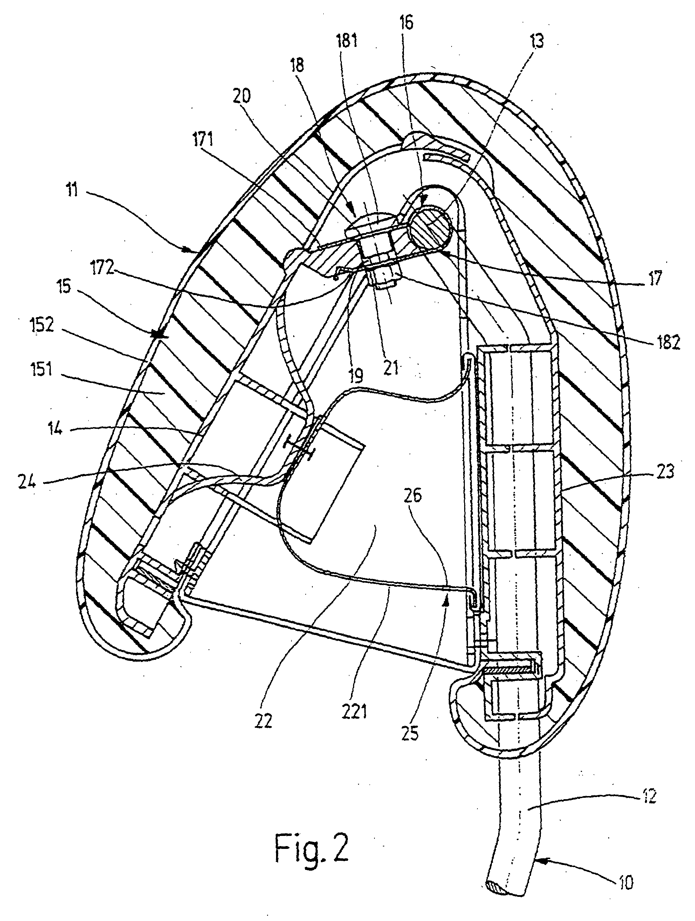

Die in Fig. 1 und 2 im Längsschnitt dargestellte Kopfstütze weist einen nur abschnittsweise dargestellten Stützbügel 10, der sitzseitig festlegbar ist, und ein am sitzfernen Ende des Stützbügels 10 angeordnetes Kopfpolster 11 auf. Der Stützbügel 10 besitzt zwei parallele Haltestangen 12, die am sitzfernen Ende durch einen Querbolzen 13 miteinander verbunden sind und in Führungshülsen innerhalb der Rückenlehne des Fahrzeugsitzes eingesteckt werden. Die Haltestangen 12 sind in den Führungshülsen höhenverstellbar geführt und in der jeweils eingestellten Höhenposition arretierbar. Von den beiden Haltestangen 12 ist in den Schnittdarstellungen der Fig. 1 und 2 nur die in Fahrtrichtung rechte Haltestange 12 zu sehen.

Das Kopfpolster 11 umfaßt einen Polsterträger 14 sowie eine den Polsterträger 14 auf dessen vom Stützbügel 10 abgekehrten Vorderseite überziehende Polsterung 15, die zusätzlich noch über den Stützbügel 10 hinwegreicht und über die vom Polsterträger 14 abgekehrte Rückseite des Stützbügels 10 geführt ist. Die Polsterung 15 setzt sich aus einem Schaumstoff 151 und einem den Schaumstoff 151 überspannenden Polsterbezug 152 zusammen, der endseitig einerseits am Polsterträger 14 und andererseits am Stützbügel 10 festgelegt . ist. Der Polsterträger 14 ist mittels einer Schwenklagerung 16 am Stützbügel 10 schwenkbar gehalten, so daß der Polsterträger 14 gegenüber dem Stützbügel 10 um einen spitzen Winkel von ca. 30° - 40° angestellt werden kann, wie dies in Fig. 2 skizziert ist. Die Verschwenkung des Polsterträgers 14 erfolgt manuell, wobei eine in der Schwenklagerung 16 integrierte Reibbremse dafür sorgt, daß der jeweils eingestelle Schwenkwinkel des Polsterträgers 14 unter normalen Bedingungen erhalten bleibt, d.h. durch die normale Kopfanlegekraft des Sitzenden nicht verändert wird. Die Schwenklagerung 16 mit Reibbremse umfaßt den die beiden Haltestangen 12 verbindenden Querbolzen 13 und eine Schelle 17, die den Querbolzen 13 reibschlüssig umschließt und an ihren beiden Schenkeln 171,172 mittels einer Schraubverbindung 18 am Polsterträger 14 befestigt ist. Die Schraube 181 der Schraubverbindung 18 ist dabei durch zwei kongruente Löcher 20,21 in den Schenkeln 171,172 und eine Bohrung 19 im Polsterträger 14 hindurchgesteckt und durch eine Mutter 182 gekontert. Mittels dieser Schraubverbindung 18 kann auch die Reibkraft der Schelle 17 am Querbolzen 13 und damit die Reibkraft der Reibbremse eingestellt werden, die so bemessen wird, daß sie größer ist als die normale Kopfanlegekraft eines Sitzbenutzers.

Im Crashfall, wenn der Kopf des Sitzbenutzers stoßartig auf das Kopfpolster 11 trifft, reicht die Reibkraft der Reibbremse in der Schwenklagerung 16 nicht aus, diesen Stoß ohne Rückstellung des Polsterträgers 14 abzufangen. Dadurch entsteht ein zusätzlicher Freiweg für den Kopf beim Zurückschleudern, was ein zusätzliches Gefährdungspotential für den Sitzenden darstellt. Zur Verhinderung einer solchen ungewollten Rückstellung des Polsterträgers 14 im Crashfall ist im Polsterträger ein Hohlkörper 22 aus elastischem Material integriert, der zwischen dem Stützbügel 10 und dem Polsterträger 14 angeordnet ist. Im Ausführungsbeispiel der Fig. 1 und 2 ist der Hohlkörper 22 einerseits an einer am Stützbügel 10 befestigten Stützstruktur 23, die sich quer zwischen den beiden Haltestangen 12 des Stützbügels 10 erstreckt, und andererseits am Polsterträger 14, und zwar dort an einem mit dem Polsterträger 14 fest verbundenen Formteil 24, festgelegt, so daß er in jeder Schwenklage des Polsterträgers 14 sich immer zwischen Stützbügel 10 und Polsterträger 14 abstützt. Die Festlegung erfolgt dabei über einander gegenüberliegenden Wandbereichen der Hohlkörperwand 221. In einer alternativen Ausführungsform kann der Hohlkörper 22 auch federelastisch mit selbstentfaltender Formgebung ausgeführt werden, wobei die federelastische Rückstellkraft des Hohlkörpers dann kleiner auszulegen ist als die Reibkraft der Reibbremse in der Schwenklagerung 16. In diesem Fall würde es genügen, den Hohlkörper 22 entweder an der Stützstruktur 23 oder am Formteil 24 zu befestigen, wobei er dann durch seine federelastische Rückstellkraft automatisch an dem jeweils anderen Teil, also an dem Formteil 24 oder an der Stützstruktur 23 anliegt.

Der Hohlkörper 22 ist mit einer Drosselöffnung 25 versehen, die so ausgelegt ist, daß sie einem stoßartigen Luftaustritt aus dem Hohlkörper 22 einen extrem hohen Strömungwiderstand und einem Luftdurchtritt mit niedriger Strömungsgeschwindigkeit einen nur kleinen Strömungswiderstand entgegensetzt. Diese Drosselöffnung 25 ist in Fig. 1 und 2 als einfache Bohrung 26 in der Hohlkörperwand 221 realisiert. Durch diese Ausbildung der Drosselöffnung 25 läßt sich das Kopfpolster 11 im Normalfall, d.h. unbelastet durch den Kopf des Sitzenden, gut in der Neigung verstellen, wobei, ausgehend von der in Fig. 1 gezeigten Grundstellung des Kopfpolsters 11, ein gewünschter Anstellwinkel des Polsterträgers 14 gegenüber dem Stützbügel 10 eingestellt werden kann. Die maximale Anstellung des Polsterträgers 14 ist in Fig. 2 zu sehen. Der an der Stützstruktur 23 und dem Formteil 24 befestigte Hohlkörper 22 folgt der langsamen Schwenkbewegung des Polsterträgers 14, wobei durch den niedrigen Strömungswiderstand der Drosselöffnung 25 Luft problemlos in den Hohlkörper 22 einströmen oder aus dem Hohlkörper 22 ausströmen kann. Im Crashfall, wenn der Kopf des Sitzenden schlagartig gegen das in der Neigung verstellte Kopfpolster 11 geschleudet wird, kommt es infolge der Druckfortpflanzung in das vom Hohlkörper 22 umschlossene Luftvolumen zu einem stoßartigen Luftaustritt durch die Drosselöffnung 25 hindurch. Die Drosselöffnung 25 setzt aber einer solch hohen Strömungsgeschwindigkeit einen extrem hohen Strömungswiderstand entgegen, so daß Luft aus dem Hohlkörper 22 im nennenswerten Umfang nicht ausströmen kann. Damit verbleibt der Polsterträger 14 trotz der Wucht des Kopfaufpralls, die bei weitem die Reibkraft der Reibbremse in der Schwenklagerung übersteigt, zuverlässig in seiner jeweils eingestellten Schwenklage.

## Patentansprüche

1. Kopfstütze für einen Fahrzeugsitz mit einem sitzseitig festlegbaren Stützbügel (10), mit einem am sitzfernen Ende des Stützbügels angeordneten Kopfpolster (11), das einen am Stützbügel zur Kopfpolsterneigungsverstellung über eine Schwenklagerung (16) gehaltenen Polsterträger (14) und eine den Polsterträger zumindest auf dessen vom Stützbügel abgekehrten Vorderseite überziehende Polsterung (15) aufweist, und mit einem luftgefüllten, volumenvariablen Hohlkörper (22), der sich in jeder Schwenklage des Polsterträgers zwischen Stützbügel und Polsterträger abstützt, und mit der Schwenklagerung (16) so ausgebildet, daß der Polsterträger (14) bei normaler Kopfanlegekraft seine eingestellte Schwenklage beibehält,
**dadurch gekennzeichnet,**
**daß** der Hohlkörper (22) mit einer Drosselöffnung (25) versehen ist, die einem stoßartigen Luftaustritt einen extrem hohen Strömungswiderstand und einem Luftaus- und -eintritt mit niedriger Strömunsgeschwindigkeit einen nur kleinen Strömungswiderstand entgegensetzt.

2. Kopfstütze nach Anspruch 1,
**dadurch gekennzeichnet,**
**daß** in der Schwenklagerung (16) eine Reibbremse integriert ist, deren Reibkraft größer ist als die normale Kopfanlegekraft.

3. Kopfstütze nach Anspruch 2,
**dadurch gekennzeichnet,**
**daß** die Schwenklagerung (16) mit Reibbremse einen am Stützbügel (10) gehaltenen Rundbolzen (13) und eine den Rundbolzen (13) reibschlüssig umgreifende Schelle (17) umfaßt, die am Polsterträger (14) befestigt ist.

4. Kopfstütze nach einem der Ansprüche 1 - 3,
**dadurch gekennzeichnet,**
**daß** der Hohlkörper (22) über einander gegenüberliegenden Wandbereichen seiner Körperwand (221) einerseits am Stützbügel (10) und andererseits am Polsterträger (14) festgelegt ist.

5. Kopfstütze nach einem der Ansprüche 1 - 3,
**dadurch gekennzeichnet,**
**daß** der Hohlkörper (22) federelastisch ausgebildet ist und mit einer Körperwand (221) an dem Stützbügel (10) und/oder dem Polsterträger (14) befestigt ist.

6. Kopfstütze nach Anspruch 5,
**dadurch gekennzeichnet,**
**daß** die federelastische Rückstellkraft des Hohlkörpers (22) kleiner ist als die Reibkraft der Reibbremse in der Schwenklagerung (16).

7. Kopfstütze nach einem der Ansprüche 1 - 6,
**dadurch gekennzeichnet,**
**daß** die Drosselöffnung (25) durch eine Bohrung (26) in der Hohlkörperwand (221) ausgebildet ist.

## Claims

1. Headrest for a vehicle seat comprising a support bracket (10) that can be fixed on the seat side and having a head cushion (11) arranged on the end of the support bracket away from the seat, the headrest comprising a cushion support (14) held on the support bracket via a swivel mounting (16) to allow adjustment of the inclination of the head cushion and padding (15) that covers the cushion support at least on its front side facing away from the support bracket, and with an air-filled, variable-volume hollow body (22) supported in any swivel position of the cushion support between the support bracket and the cushion support, the swivel mounting (16) being formed such that the cushion support maintains its adjusted position under normal head contact force,
**characterised in that**
the hollow body (22) is provided with a throttle aperture (25) which opposes a sudden outflow of air with an extremely high flow resistance and an outflow or inflow of air at lower flow speed with only small flow resistance.

2. Headrest according to Claim 1,
**characterised in that**
a friction brake is integrated in the swivel mounting (16), whose friction force is larger than the normal head contact force.

3. Headrest according to Claim 2,
**characterised in that**
the swivel mounting (16) with its friction brake comprises a round bolt (13) held on the support bracket (10) and a clamping collar (17) that surrounds the round bolt (13) and holds it by friction, the said collar being attached to the cushion support (14).

4. Headrest according to any of Claims 1 to 3,
**characterised in that**
the hollow body (22) is held in position via wall areas of its body wall (221) located opposite one another, on one side against the support bracket (10) and on the other side against the cushion support (14).

5. Headrest according to any of Claims 1 to 3,
**characterised in that**
the hollow body (22) is elastically springy and is attached with a body wall (221) on the support bracket (10) and/or on the cushion support (14).

6. Headrest according to Claim 5,
**characterised in that**
the elastic restoring force of the hollow body (22) is smaller than the friction force of the friction brake in the swivel bearing (16).

7. Headrest according to any of Claims 1 to 6,
**characterised in that**
the throttle aperture (25) is formed by a hole (26) in the wall (221) of the hollow body.

## Revendications

1. Appui-tête pour un siège de véhicule, comprenant :
une armature support (10) pouvant être fixée côté siège, un coussin de tête (11) disposé au niveau de l'extrémité de l'armature support, éloignée du siège, lequel coussin de tête comprend un support de coussin (14) fixé au niveau de l'armature support, pour le réglage de l'inclinaison du coussin de tête au moyen d'une fixation pivotante (16), et un rembourrage (15) recouvrant le support de coussin au moins sur sa face avant placée à l'opposé de l'armature support, et comprenant un corps creux (22) variable en volume et rempli d'air, lequel corps creux vient en appui entre l'armature support et le support de coussin, dans chaque position pivotante du support de coussin, et en ayant la fixation pivotante (16) configurée de façon telle que le support de coussin (14) conserve sa position pivotante réglée en cas de force d'appui normale de la tête,
**caractérisé en ce que** le corps creux (22) est doté d'une ouverture à étranglement (25) qui, à une forte sortie d'air, oppose une résistance d'écoulement extrêmement élevée et qui, à une sortie d'air et à une entrée d'air à faible vitesse d'écoulement, n'oppose qu'une faible résistance d'écoulement.

2. Appui-tête selon la revendication 1, **caractérisé en ce qu'**un frein à friction est intégré dans la fixation pivotante (16), frein à friction dont la force de frottement est supérieure à la force d'appui normale de la tête.

3. Appui-tête selon la revendication 2, **caractérisé en ce que** la fixation pivotante (16) dotée du frein à friction comprend un boulon à tête ronde (13) fixé sur l'armature support (10), et une bride de fixation (17) entourant par frottement le boulon à tête ronde (13), laquelle bride de fixation est fixée sur le support de coussin (14).

4. Appui-tête selon l'une quelconque des revendications 1 à 3, **caractérisé en ce que** le corps creux (22), au-dessus de zones de paroi opposées l'une à l'autre de sa paroi (221), est fixé d'une part sur l'armature support (10) et d'autre part sur le support de coussin (14).

5. Appui-tête selon l'une quelconque des revendications 1 à 3, **caractérisé en ce que** le corps creux (22) est configuré de façon déformable et dont une paroi (221) est fixée sur l'armature support (10) et/ou sur le support de coussin (14).

6. Appui-tête selon la revendication 5, **caractérisé en ce que** la force de rappel déformable du corps creux (22) est plus faible que la force de frottement du frein à friction dans la fixation pivotante (16).

7. Appui-tête selon l'une quelconque des revendications 1 à 6, **caractérisé en ce que** l'ouverture à étranglement (25) est formée par un perçage (26) dans la paroi (221) du corps creux.
